# EUROPEAN PATENT APPLICATION

(11) **EP 1 619 421 A2**
(43) Date of publication of application: **25.01.2006**
(21) Application number: 05076669.0
(22) Date of filing: 20.07.2005
(51) Int. Cl.: F16H 61/28, F16H 63/10

(54) **Shift operating apparatus for a vehicle**

(30) Priority: 20.07.2004 JP 2004211946
(71) Applicant: AISIN AI Co., Ltd., Nishio-shi, Aichi-ken (JP)
(72) Inventor: Ogami, Shiro, Nishio-Shi Aichi-Ken (JP); Nakao, Toshiyuki, Nishio-Shi Aichi-Ken (JP); Tanba, Toshio, Nishio-Shi Aichi-Ken (JP); Ishihama, Kenichi, Nishio-Shi Aichi-Ken (JP)
(74) Representative: Marshall, John Grahame

(57) **Abstract**

A shift operating apparatus for a vehicle includes plural operating members, on which toothed portions (21, 22, 23 and 24) are respectively formed, tooth phases of the respective toothed portions which is mutually matched in a shift direction (C1 and C2) when the operating members (11, 12, 13 and 14) are positioned at a neutral position; an engagement gear (33) included in a switching engagement body (3) and engageable with the respective toothed portions of the respective operating members. When one of the operating members has moved in the shift direction from the neutral position, the tooth phase of the toothed portion of the one of the operating members is matched with the tooth phases of the toothed portions of the other operating members.

## Description

### FIELD OF THE INVENTION

This invention generally relates to a shift operating apparatus which is mounted on a vehicle.

### BACKGROUND

In order to improve fuel efficiency, and a driving performance, of a vehicle, recent requirements have led to automation of a shift operating apparatus applied to a conventional gear-type manual transmission. Especially, as is disclosed in JP56(1981)-127842A and DE3530017, a twin clutch-type automated manual transmission has been suggested, the transmission which is provided with two clutch mechanisms (a first clutch and a second clutch) for transmitting driving power from an engine to the transmission, and two input shafts (a first input shaft and a second input shaft). In this type of transmission, the first clutch is engaged with the first input shaft, while the second clutch is engaged with the second input shaft. On the first input shaft, there are odd numbered gear trains (a first shift stage gear train, a third shift stage gear train and a fourth shift stage gear train) mounted, while, on the second input shaft, there are even numbered gear trains (a second shift stage gear train, a fourth shift stage gear train and a sixth shift stage gear train) mounted.

According to the above-described shift operating apparatus for a vehicle, which includes the twin clutch-type automated manual transmission, when a shift stage established in the transmission is switched from a first shift stage to a second shifts stage while the frictional slip-type first clutch is frictionally being engaged with a clutch mating, the second clutch is frictionally engaged with a clutch mating while the first clutch is still being frictionally engaged with the clutch mating. Therefore, when a shift stage in the transmission is switched, it is possible to transmit, via the first shift stage gear train and the second shift stage gear train, driving force of an engine to an output shaft of the transmission, thereby enabling to transmit driving torque to the output shaft of the transmission via both the first input shaft and the second input shaft. As a result, when a shift stage in the transmission is switched, torque transmission to the output shaft is not interrupted, and a shift operation can be effectively implemented while curving interruption of torque transmission.

As one of a shift control mechanism, WO01/84019 discloses a shift operating apparatus for a vehicle, the apparatus which is provided with a group of operating members, which is configured with plural operating members that are arranged in parallel to one another along a select direction, a switching engagement body, which can be frictionally engaged with the respective operating members and can move both in select and shift directions, a select actuator, which moves the switching engagement body in a select direction in such a manner that the switching engagement body is engaged with one operating member from among the group of operating members, and a shift actuator, which moves the switching engagement body in a shift direction and moves the one operating member, which has been engaged with the switching engagement body, in a shift direction.

As is illustrated in Fig. 14, according to a conventional technology disclosed in WO01/84019, when a first operating member 11w moves in a direction of arrow C1, a first shift stage is established, while, when the first operating member 11w moves in a direction of arrow C2, a third shift stage is established. When a second operating member 12w moves in the direction of arrow C2, a second shift stage is established, while, when the second operating member 12w moves in the direction of arrow C1, a fourth shift stage is established. When a third operating member 13w moves in the direction of arrow C2, a fifth shift stage is established, while, when the third operating member 13w moves in the direction of arrow C1, a seventh shift stage is established. When a fourth operating member 14w moves in the direction of arrow C2, a reverse shift stage is established, while, when the fourth operating member 14w moves in the direction of arrow C1, a sixth shift stage is established. Herein, the first operating member 11w, the second operating member 12w, the third operating member 13w and the fourth operating member 14w are each provided with a fitting groove 22w which an inner lever portion 20w is fitted into and is engaged with.

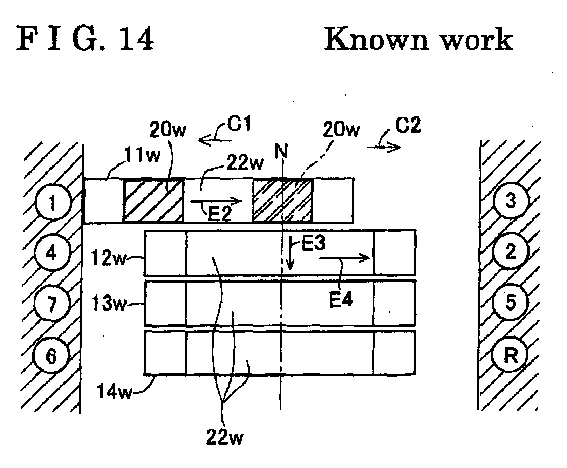

Fig. 14 illustrates a first shift stage being established with the first operating member 11w, which has been moved by the inner lever portion 20w in the direction of arrow C1. As is apparent from Fig. 14, when a shift stage in a transmission is switched from a first shift stage to a second shit stage, at a time that the first operating member 11w has moved in the direction of arrow C1 so as to establish the first shift stage, the inner lever portion 20w is moved in a direction of arrow E2 so as return to a neutral position (N). After returning to the neutral position (N), the inner lever portion 20w is moved in a direction of arrow E3 so as to be positioned at the groove 22w of the second operating member 12w. After being seated at the fitting groove 22w of the second operating member 12w, the inner lever portion 20w is moved in a direction of arrow E4, and the second operating member 12w is then moved in the direction of arrow C2.

According to the above-described technology, it is necessary to once return the inner lever portion 20w to the neutral position (N), wherein an operating distance which the inner lever portion 20w has to move may be increased. Therefore, it may require a relatively long operating time for the inner lever portion 20w, and then for a shift operation of a vehicle. Consideration should be hence given to a limited response in a shift operation, the limited response that occurs due to the above description.

The present invention has been made in view of the above circumstances, and provides a shift operating apparatus for a vehicle by which it is possible to improve a response in a shift operation.

### SUMMARY OF THE INVENTION

According to an aspect of the present invention, a shift operating apparatus for a vehicle including a group of operating members including: plural operating members and arranged all in parallel in a select direction; a switching engagement body engageable with the respective plural operating members and movable in a shift direction and in the select direction; a select operating means for moving the switching engagement body in the select direction and for engaging the switching engagement body with one operating member from among the plural operating members to establish one shift stage; and a shift operating means for moving the one operating member, which has been engaged with the switching engagement body, in the shift direction by moving the switching engagement body in the shift direction. The shift operating apparatus is characterized in further comprising toothed portions respectively formed on the respective operating members, tooth phases of the respective toothed portions being mutually matched in the shift direction when the operating members are positioned at a neutral position; and an engagement gear included in the switching engagement body and engageable with the respective toothed portions of the respective operating members. When one of the operating members has moved in the shift direction from the neutral position, the tooth phase of the toothed portion of the one of the operating members is matched with the tooth phases of the toothed portions of the other operating members.

### BRIEF DESCRIPTION OF THE DRAWINGS

The foregoing and additional features and characteristics of the present invention will become more apparent from the following detailed description considered with reference to the accompanying drawings, wherein:

Fig. 1 is a view schematically illustrating a shift operating apparatus for a vehicle which is provided with a twin clutch-type manual transmission;

Fig. 2 is a view illustrating an H-shift range of the transmission;

Fig. 3 is a view illustrating a relevant portion in the vicinity of a shift and select shaft of the shift operating apparatus according to a first embodiment of the present invention;

Fig. 4 illustrates an engagement condition between an engagement gear of the shift and select shaft and a first toothed portion of the first operating member which is positioned at a neutral position;

Fig. 5 illustrates an engagement condition between the engagement gear of the shift and select shaft and the first toothed portion of the first operating member which is positioned at a shift position;

Fig. 6 is a view illustrating a vicinity of the shift and select shaft;

Fig. 7 is a view schematically illustrating a structure of a group of operating members which are all positioned at a neutral position;

Fig. 8 is a view schematically illustrating the first operating member moved in a shift direction to establish a first shift stage;

Fig. 9 is a view schematically illustrating a second operating member moved in a shift direction to establish a second shift stage while the first operating member has moved in the shift direction;

Fig. 10 is a view schematically illustrating the first operating member moved in a shift direction while the second operating member has moved in the shift direction;

Fig. 11 is a view illustrating a relevant portion in the vicinity of a shift and select shaft of a shift operating apparatus according to a second embodiment of the present invention;

Fig. 12 illustrates an engagement condition between an engagement gear of the shift and select shaft and a first toothed portion of a first operating member according to the second embodiment;

Fig. 13 is a view illustrating an engagement gear of the shift and select shaft and a lock toothed portion according to the second embodiment; and

Fig. 14 is a view schematically illustrating a structure of a group of operating members according to a known work.

### DETAILED DESCRIPTION

Embodiments of the present invention will be described hereinbelow in detail with reference to the accompanying drawings.

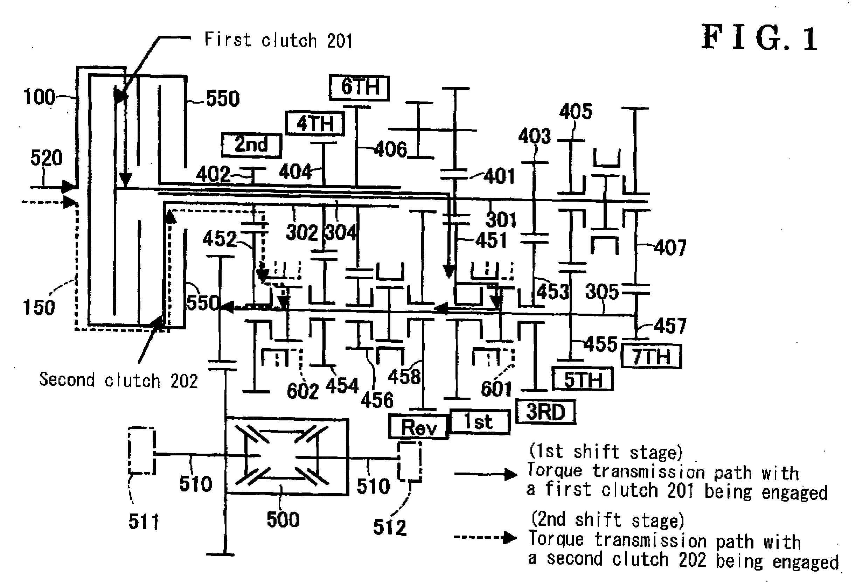

As is illustrated in Fig. 1, according to a first embodiment of the present invention, a transmission apparatus for a vehicle includes a first clutch 201 configured to be frictionally engaged with a clutch mating 550, a second clutch 202 configured to be frictionally engaged with the clutch mating 550, a first input shaft 301 which is connected to the first clutch 201, a second input shaft 302 which is connected to the second clutch 202, and an output shaft 305 which rotates in response to rotation, of the first input shaft 301, or of the second input shaft 302, or in response to rotation of both the first and second input shafts 301 and 302. The first input shaft 301 is coaxially arranged inside of a hollow cylinder 304 of the second input shaft 302.

On the first input shaft 301, odd-numbered gear trains are mounted, which are a first shift stage gear train 401, a third shift stage gear train 403, a fifth shift stage gear train 405, and a seventh shift stage gear train 407. On the second input shaft 302, even-numbered gear trains are mounted, which are a second shift stage gear train 402, a fourth shift stage gear train 404 and a sixth shift stage gear train 406. On the output shaft 305, driven gears 451, 452, 453, 454, 455, 456, 457 and 458 are mounted. A drive shaft 510 is driven via a differential gear 500 and is mounted, thereon, with vehicle wheels 511 and 512.

When the first clutch 201 is frictionally engaged with the clutch mating 550, a crankshaft 520 at an engine side is connected to the first input shaft 301 via the first clutch 201 being frictionally engaged. In this case, a driving force transmission path is established via the first clutch 201 between the crankshaft 520 and the first input shaft 301, wherein rotational driving force of the crankshaft 520 is transmitted to the first input shaft 301 via the first clutch 201. As a result, the first input shaft 301 rotates. On the other hand, when the second clutch 202 is frictionally engaged with the clutch mating 550, the crankshaft 520 at an engine side is connected to the second input shaft 302 via the second clutch 202 being frictionally engaged. In this case, a driving force transmission path is established via the second clutch 202 between the crankshaft 520 and the second input shaft 302, wherein rotational driving force of the crankshaft 520 is transmitted to the second input shaft 302 via the second clutch 202. As a result, the second input shaft 302 rotates.

A shift operation is performed via a hub sleeve 601 or 602. Going back to Fig. 1, a transmission path 100, which is denoted with a solid line in Fig. 1, represents a torque transmission path established when a vehicle drives at a first shift stage with the first clutch 201 being engaged. On the other hand, a transmission path 150, which is denoted with a broken line in Fig. 1, represents a torque transmission path established when a vehicle drives at a second shift stage with the second clutch 202 being engaged.

According to a twin clutch-type transmission apparatus according to the first embodiment of the present invention, when a shift stage in a transmission is switched from a first shift stage to a second shift stage, frictional engagement of the second clutch 202 is executed when the first clutch 201 has been frictionally engaged. Therefore, while an engine torque is being transmitted to the output shaft 305 via the first shift stage gear train 401 mounted on the first input shaft 301, it is possible to transmit an engine torque to the output shaft 305 also via the second shift stage gear train 402 mounted on the second input shaft 302. As a result, even when a shift stage in a transmission is switched from the first shift stage to the second shift stage, it is possible to restrain interruption.of torque transmission from the crankshaft 520 to the output shaft 305, and to perform effectively a shift operation.

As described above, according to the first embodiment of the present invention, even when a shift operation is required, it is possible to transmit torque with high transmission efficiency, and to improve fuel efficiency while a vehicle is driving. This results from the frictional engagement disc-type clutches 201 and 202. That is, even when torque transmission is implemented via both the first clutch 201 and the second clutch 202, the first and second clutches 201 and 202 are engaged with the clutch mating 550 in a slip manner, wherein it is possible to absorb a rotational speed difference between the first and second clutches 201 and 202, relative to the clutch mating 550. Further, when a shift operation from the first shift stage to the second shift stage is completed, the first clutch 201 is released from being frictionally engaged, while the second clutch 202 is maintained to be frictionally engaged.

When a shift operation from a second shift stage to a third shift stage is performed, frictional engagement of the first clutch 201 is executed when the second clutch 202 has been frictionally engaged. Therefore, while an engine torque is being transmitted to the output shaft 305 via the second shift stage gear train 402 mounted on the second input shaft 302, it is possible to transmit an engine torque to the output shaft 305 also via the third shift stage gear train 403 mounted on the first input shaft 301. When a shift operation from the second shift stage to the third shift stage is completed, the second clutch 202 is released from being frictionally engaged, while the first clutch 201 is maintained to be frictionally engaged.

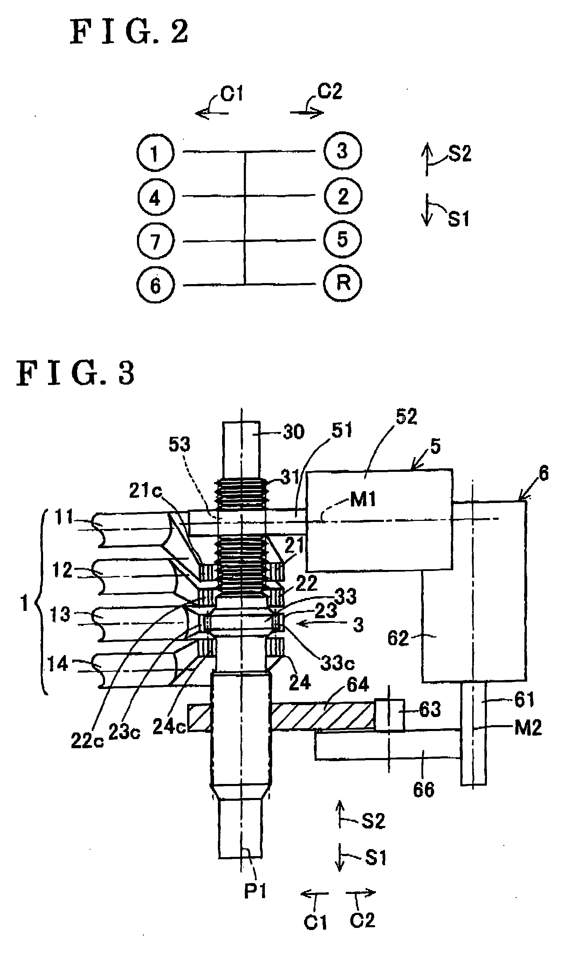

As is illustrated in Fig. 2, according to the first embodiment, select directions of a select operation are denoted with arrows S1 and S2, while shift directions of a shift operation are denoted with arrows C1 and C2. As is illustrated in Fig. 2 a first shift stage, a fourth shift stage, a seventh shift stage, and a sixth shift stage are in parallel lined in the select direction of arrow S1, while a third shift stage, a second shift stage, a fifth shift stage and a reverse shift stage are in parallel lined in the select direction of arrow S1. Moreover, in the shift directions of arrows C1 and C2, the first shift stage is lined up with the third shift stage, the fourth shift stage is lined up with the second shift stage, the sevenths shift stage is lined up with the fifth shift stage, the sixth shift stage is lined up with the reverse shift stage. However, the above alignment of the shift stages is regarded as illustrative rather than restrictive. Therefore, the other alignments thereof are also applicable.

As is illustrated in Fig. 3, the shift operating apparatus for a vehicle according to the first embodiment of the present invention is further provided with a group of operating members 1, a switching engagement body 3 engageable with the group of operating members 1, a shift and select shaft 30 employed as a main element of the switching engagement body 3, a select actuator 5 for moving the shift and select shaft 30 in the select direction of either arrows S1 or S2, and a shift actuator 6 for moving the switching engagement body 3 in the shift direction of either arrows C1 or C2.

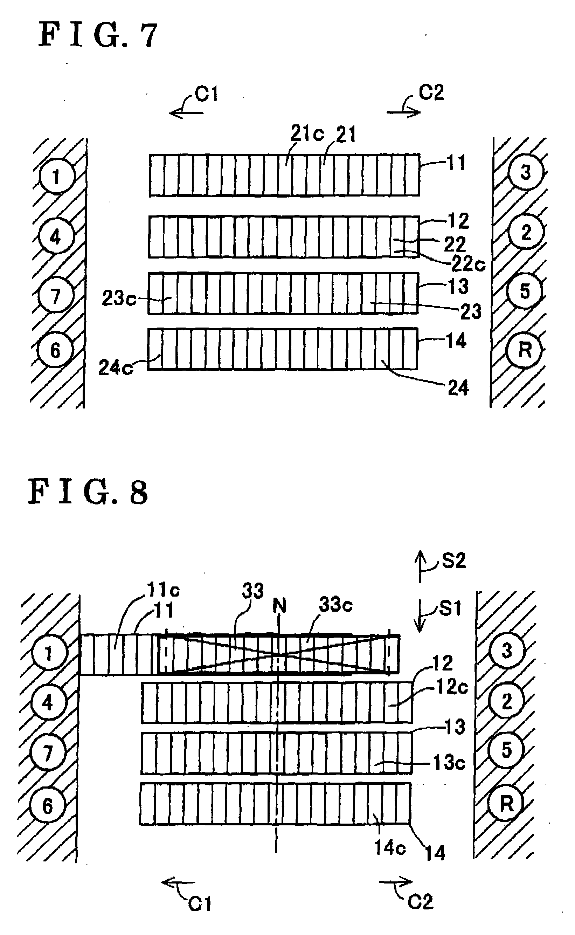

The group of operating members 1 includes a first operating member 11, a second operating member 12, a third operating member 13 and a fourth operating member 14, all of which are aligned in parallel in the select direction. The operating members 11-14 are shift fork shafts which are respectively formed integrally with shift heads. According to the first embodiment of the present invention, as is obvious from Fig. 7, the first and third shift stages are defined by the first operating member 11, the fourth and second shift stages are established by the second operating member 12, the seventh and fifth shift stages are established by the third operating member 13, and the sixth and reverse shift stages are established by the fourth operating member 14.

Herein, with reference to Figs. 7 and 8, when the first operating member 11 moves in the direction of arrow C1, a first shift stage is established, while, when the first operating member 11 moves in the direction of arrow C2, a third shift stag is established. When the second operating member 12 moves in the direction of arrow C1, a fourth shift stage is established, while, when the second operating member 12 moves in the direction of arrow C2, a second shift stag is established. When the third operating member 13 moves in the direction of arrow C1, a seventh shift stage is established, while, when the third operating member 13 moves in the direction of arrow C2, a fifth shift stage is established. When the fourth operating member 14 moves in the direction of arrow C1, a sixth shift stage is established, while, when the fourth operating member 14 moves in the direction of arrow C2, a reverse shift stage is established.

As is illustrated in Figs. 7 and 8, the first operating member 11, the second operating member 12, the third operating member 13 and the fourth operating member 14 are respectively provided, thereon, with a first toothed portion 21, a second toothed portion 22, a third toothed portion 23 and a fourth toothed portion 24, of which tooth phases in the shift direction are all matched together at the time that the operating members 11, 12, 13 and 14 are positioned at a neutral position (N). In details, the first toothed portion 21, which is of rack-shaped and is integrally formed with parallel type teeth 21c, extends in the sift direction on the first operating member 11. The second toothed portion 22, which is also of rack-shaped and is integrally formed with parallel type teeth 22c, extends in the shift direction on the second operating member 12. The third toothed portion 23, which is also of rack-shaped and is integrally formed with parallel type teeth 23c, extends in the shift direction on the third operating member 13. The fourth toothed portion 24, which is also of rack-shaped and is integrally formed with parallel type teeth 24c, extends in the shift direction on the fourth operating member 14.

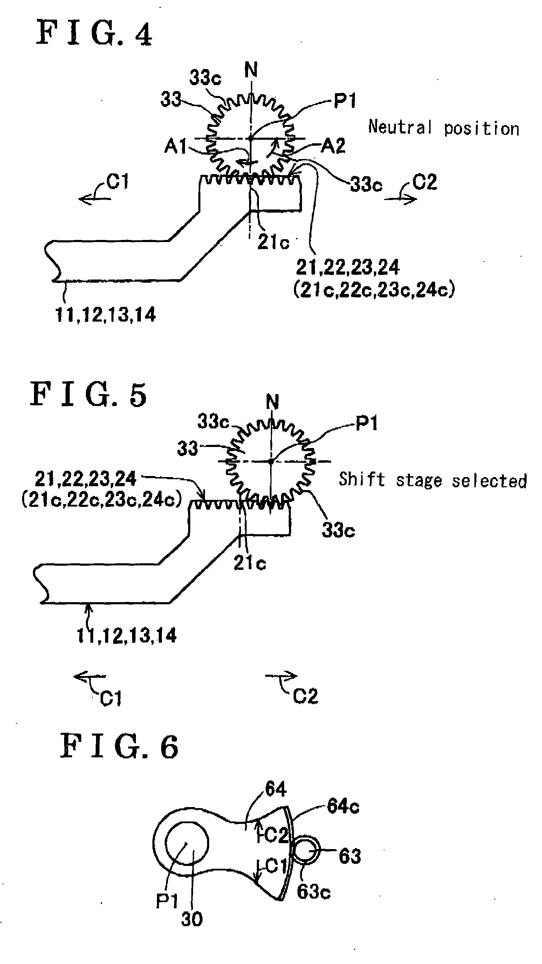

Fig. 7 illustrates the operating members 11-14 which all are positioned at a neutral position N. The neutral position N is defined at an intermediate position in the shift direction of arrows C1 and C 2. When the operating members 11-14 are positioned at the neutral position N, tooth-shaped phases (tooth pitches) of the toothed portions 21, 22, 23 and 24 are all matched together among the operating members 11-14 in the shift direction. In other words, as illustrated in Figs. 4 and 5, tooth traces, of the respective teeth 21c of the first toothed portion 21 of the first operating member 11, of the respective teeth 22c of the second toothed portion 22 of the second operating member 12, of the respective teeth 23c of the third toothed portion 23 of the third operating member 13, and of the respective teeth 24c of the fourth toothed portion 24 of the fourth operating member 24, are formed in parallel all together. Moreover, at the neutral position (N), the tooth phases (tooth pitches), and the tooth shapes, of the respective operating members are all identical and matched together. According to the first embodiment of the present invention, the tooth phases (tooth pitches) of the respective operating members are all identical together with high precision on an assumption that industrial products on occasion may possess tolerance to a certain degree.

As is illustrated in Fig. 3, the switching engagement body 3 operates the first operating member 11, the second operating member 12, the third operating member 13 and the fourth operating member 14 in an independent manner therefrom, respectively. The switching engagement body 3 is mainly configured with the shift and select shaft 30 capable of being operated in the shift direction (illustrated with arrows C1 and C2) and in the select direction (illustrated with arrows S1 and S2), and an engagement gear 33 which is of pinion gear-shaped and is provided coaxially with the shift and select shaft 30 so as to rotate together with the shift and select shaft 30 in response to a shift operation of the shift and select shaft 30. When the shift and select shaft 30 rotates about an axis P1, the engagement gear 33 rotates about the axis P1 together with the shift and select shaft 30. The engagement gear 33 is established with parallel-type plural teeth 33c thereon. Tooth traces of the teeth 33c of the engagement gear 33 are defined so as to be in parallel with the tooth traces of the teeth 21c, 22c, 23c, and 24c. Moreover, the tooth pitch of each toothed portion of the engagement gear 33 is substantially identical to the tooth pitch of each toothed portion 21, 22 23 and 24, wherein each toothed portion of the engagement gear 33 is matched with each toothed portion 21, 22, 23 and 24. The plural teeth 33c of the engagement gear 33 are configured to be capable of being engaged with the toothed portions 21, 22, 23 and 24.

As is illustrated in Fig. 3, the shift and select shaft 30 extends along the select direction (illustrated with arrows S1 and S2), and is provided with a rack gear 31 which also extends along the select direction.

The select actuator, which serves as a select operating means, is mainly configured with a select motor 52 incorporating, therein, a motor shaft 51 that rotates about an axis M1, and a pinion gear 53 which is formed on the motor shaft 51. This pinion gear 53 can be engaged with the rack gear 31 of the shift and select shaft 30. When the select motor 52 is driven, the pinion gear 53 rotates about the axis M1 together with the motor shaft 51 rotating. In response to the rotation of the pinion gear 53, the rack gear 31 moves in the select direction (illustrated with arrows S1 and S2), and the shift and select shaft 30 moves in this select direction together with the engagement gear 33. Accordingly, the engagement gear 33 can face one of the first, second, third and fourth toothed portions 21, 22, 23 and 24, and is engaged therewith.

The shift actuator, which serves as a shift operating means, is mainly configured with a shift motor 62 incorporating, therein, a motor shaft 61 that rotates about an axis M2, a pinion gear 63 which is established, thereon, with teeth 63c, and is connected to the motor shaft 61 via a transmitting member 66, and an oscillating body 64 which is established, thereon, with teeth 64c, and oscillates in response to rotation of the pinion gear 63 in the shift direction (illustrated with arrows C1 and C2). This oscillating body 64 is connected to the shift and select shaft 30. When the shift motor 62 of the shift actuator 6 is driven, the pinion gear 63 rotates, the oscillating body 64 is oscillated, and the shift and select shaft 30 then rotates in the shift direction (illustrated with arrows C1 and C2).

At the neutral position (N), the engagement gear 33 of the shift and select shaft 30 is engaged with a tooth 21c defined at an intermediate position in the shift direction of the first toothed portion 21 of the first operating member 11. As is apparent from Figs. 4 and 5, in order to establish a first shift stage from the neutral position (N), while the engagement gear 33 of the shift and select shaft 30 is being maintained at this current position illustrated in Fig. 4, the engagement gear 33, which corresponds to a pinion gear, is rotated in a direction of arrow A1 about the axis P1, wherein the first operating member 11 is moved, by a pinion and rack mechanism, in the shift direction of arrow C1. That is, when the engagement gear 33 of the shift and select shaft 30 is engaged with the first toothed portion 21 of the first operating member 11, the first operating member 11 can be moved in the direction of arrow C1, wherein the first shift stage is established in the transmission.

On the other hand, at the neutral position (N) illustrated in Fig. 4, when a third shift stage is required, while the engagement gear 33 of the shift and select shaft 30 is being maintained at this current position illustrated in Fig. 4, the engagement gear 33 is rotated in a direction of arrow A2 about the axis P1, wherein the first operating member 11 is moved, by a pinion and rack mechanism, in the shift direction of arrow C2. Accordingly, a third shift stage is established in the transmission.

When the first operating member 11 is moved from the neutral position (N) to a first shift stage position, a shift stroke SL, at which the first operating member 11 moves in the direction of arrow C1, is fundamentally designed at an amount corresponding to the number of teeth (an integer) which are employed for the shift operation. That is, the shift stroke SL is fundamentally designed at a distance of an integer of a whole thickness of teeth that are employed for the shift operation. Therefore, the shift stroke SL (unit: mm) is fundamentally designed at a distance calculated by multiplying the number of teeth (an integer), which are employed for the shift operation, by a tooth thickness of a single tooth. Therefore, upon a shift operation, the first operating member 11 moves at a distance that corresponds to the number of teeth (an integer) which is employed for the shift operation. On the other hand, when the first operating member 11 is moved from the neutral position (N) to a third shift stage position, a shift stroke SL, at which the first operating member 11 moves in the direction of arrow C2, is fundamentally designed at an amount corresponding to the number of teeth (an integer). Therefore, upon a shift operation to the third shift stage, the first operating member 11 moves at a distance that corresponds to an integral portion of the number of teeth.

According to the first embodiment of the present invention, even when any of the operating members is moved in the shift direction, tooth phases (tooth pitches) of the respective operating members can be effectively matched therewith. In consideration of errors, the shift stroke SL (unit: mm) can be designed at a distance (0.9-1.1) calculated by multiplying the number of teeth (an integer) by a tooth thickness of a single tooth.

Likewise, when the second operating member 12 is switched from the neutral position (N) to a fourth shift stage position, a shift stroke SL of the second operating member 12 in the direction of arrow C1 corresponds to the number of teeth (an integer). When the second operating member 12 is switched from the neutral position (N) to a second shift stage position, a shift stroke SL of the second operating member 12 in the direction of arrow C2 also corresponds to the number of teeth (an integer). Shift strokes SL of the third and fourth operating members 13 and 14 can be designed in the same manner.

Therefore, according to the first embodiment of the present invention, when the first operating member 11 is moved from a neutral position to a certain shift stage position, the first toothed portion 21 of the first operating member 11, which has moved in the shift direction, can be matched, in terms of tooth phases (tooth pitches), with the toothed portions 22, 23 and 24 of the other operating members 12, 13 and 14. Likewise, when the second operating member 12 is moved from the neutral position to a certain shift stage position, the toothed portion 22 of the second operating member 12, which has moved in the shift direction, can be matched, in terms of tooth phases (tooth pitches), with the toothed portions 21, 23 and 24 of the other operating members 11, 13 and 14. Further likewise, when the third operating member 13 is moved from the neutral position to a certain shift stage position, the toothed portion 23 of the third operating member 13 is matched, in terms of tooth phases (tooth pitches), with the other operating members 11, 12 and 14. Still further, likewise, when the fourth operating member 14 is moved from the neutral position to a certain shift stage position, the toothed portion 24 of the fourth operating member 14 is matched, in terms of tooth phases (tooth pitches), with the toothed portions 21, 22 and 24 of the other operating members 11, 12 and 13.

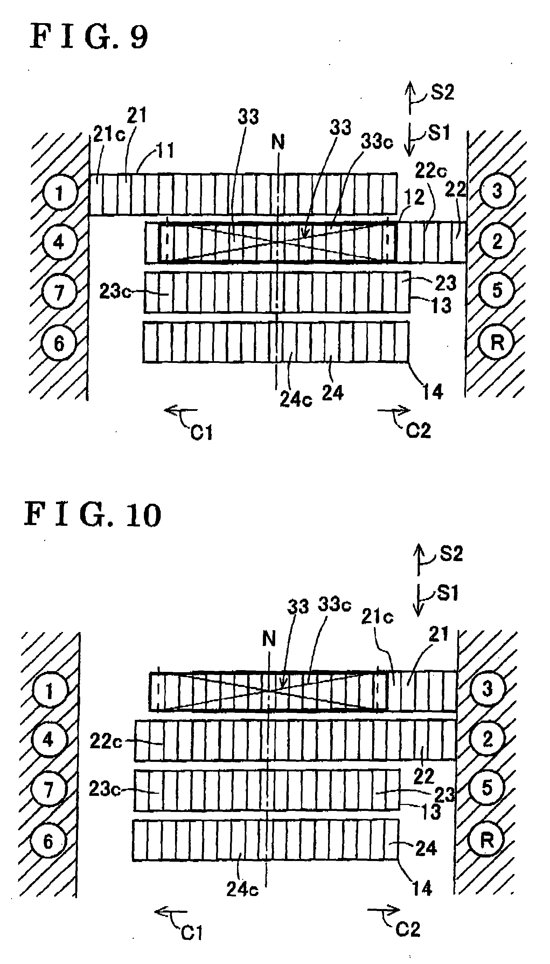

Next, described below is an operation at a shift operation from a first shift stage to a second shift stage with reference to Figs. 8 and 9.

As is illustrated in Fig. 8, while the first operating member 11 is being positioned at a first shift stage position after movement in the direction of arrow C1, the shift and select shaft 30 is moved directly in a direction of arrow S1. As a result, the engagement gear 33 of the shift and select shaft 30 is released from being engaged with the first toothed portion 21 of the first operating member 11 and is engaged with the second toothed portion 22 of the second operating member 12, as is illustrated in Fig. 9. As the reasons for that the above shift and select operation can be achieved, there are mainly three reasons: 1) the shift stroke SL from the neutral position (N) is designed at an amount corresponding to the number of teeth (an integer); 2) all of the toothed portions 21, 22, 23 and 24 are identical all together in terms of tooth phases (tooth pitches) and tooth shapes; and 3) all of the toothed portions 21, 22, 23 and 24 are matched all together in terms of tooth phases (tooth pitches) in the shift direction, i.e. in the direction of arrows C1 and C2. Therefore, this structure facilitates an engagement switching operation of the engagement gear 33 from the first toothed portion 21 of the first operating member 11 to the second toothed portion 22 of the second operating member 12. Further, according to the first embodiment of the present invention, the engagement gear 33 of the shift and select shaft 30 directly moves in the direction of arrow S1, it is not necessary for the engagement gear 33 to return to a neutral position, which is actually necessary according to a conventional work illustrated in Fig. 14. In such a case, in terms of a mechanical structure, a running distance of the engagement gear 33 can be abbreviated. Moreover, in terms of an operation, upon a select operation, only a single operation, by which the engagement gear 33 is moved directly in the direction of arrows S1, is required. Therefore, it is possible to abbreviate an operating time that is required.

Next, in response to activation of the shift actuator 6, the shift and select shaft 30 and the engagement gear 33 are rotated, and the second operating member 12 is moved in the shift direction of arrow C2, as is illustrated in Fig. 9, wherein an actual shift stage is switched to a second shift stage.

In this case, as is illustrated in Fig. 9, while the first operating member 11 is being moved in the direction of arrow C1, the second operating member 12 is moved in the direction of arrow C2. In such circumstances, as far as the first clutch 201 and the second clutch 202 are both frictionally engaged with the clutch mating 550 and are connected to the crankshaft 520, torque from the crankshaft 520 can be transmitted to the output shaft 305 not only via the first shift stage gear train 401 but also via the second shift stage gear train 402. Therefore, according to the first embodiment of the present invention, it is possible to curb interrupting torque transmission from the crankshaft 520 to the output shaft 305, and to perform torque transmission with high transmission efficiency. Moreover, it is possible to reduce a degree of unpleasant feeling that an occupant may have, and to reduce fuel consumption to an economic level. This results from the frictionally engagement disc-type clutches 201 and 203. That is, even when torque transmission is implemented via the first clutch 201 and the second clutch 202, the first clutch 201 and the second clutch 202 can slip.

When an actual shift stage has switched from the first shift stage to the second shift stage, the second clutch 202 is maintained to be frictionally engaged while the first clutch 201 is released from being frictionally engaged. In response to disengagement of the first clutch 201, torque transmission path established to the output shaft 305 via the first drive gear 401 is interrupted. However, because the second clutch 202 is being frictionally engaged in this case, a torque transmission path is established to the output shaft 305 via the second shift stage gear train 402 of the second input shaft 302.

Next, described below is an operation at a shift operation from a second shift stage to a third shift stage with reference to Figs. 9 and 10.

As is illustrated in Figs. 9 and 10, in response to activation of the select actuator 5, the shift and select shaft 30 and the engagement gear 33 move directly in the direction of arrow S2. The engagement gear 33 of the shift and select shaft 30 can be easily switched from being engaged with the second toothed portion 22 of the second operating member 12 (see Fig. 9) to being engaged with the first toothed portion 21 of the first operating member 11 (See Fig. 10). Moreover, because the engagement gear 33 of the shift and select shaft 30 is moved directly in the direction of arrow S2, it is possible to abbreviate an operation time which is required to a select operation.

Next, described below is an operation for moving the shift and select shaft 30 in response to activation of the shift actuator 6, and moving the first operating member 11 in the shift direction of arrow C2, wherein an actual shift stage is switched to a third shift stage.

In this case, as is illustrated in Fig. 10, while the second operating member 12 is being positioned at a second shift stage position after moving in the direction of arrow C2, the first operating member 11 is moved in the direction of arrow C2. In such circumstances, as far as the first clutch 201 and the second clutch 202 are both frictionally engaged with the clutch mating 550 and are connected to the crankshaft 520, torque from the crankshaft 520 can be transmitted to the output shaft 305 not only via the first shift stage gear train 402 but also via the third shift stage gear grain 403. Therefore, according to the first embodiment of the present invention, also when an actual shift stage is switched from a second shift stage to a third shift stage, it is possible to curb interrupting torque transmission from the crankshaft 520 to the output shaft 305, and to perform torque transmission with high transmission efficiency. This results from the frictionally engagement disc-type clutches 201 and 203. That is, even when torque transmission is implemented via the first clutch 201 and the second clutch 202, the first clutch 201 and the second clutch 202 can slip.

When a shift operation from a third shift stage to a fourth shift stage is performed, or when a shift operation from a fourth shift stage to a fifth shift stage is performed, the same operation as described can be implemented.

As described above, according to the first embodiment of the present invention, it is possible to facilitate gear engagement of the engagement gear 33 of the shift and select shaft 30 among the toothed portions 21, 22, 23 and 24 of the operating members 11-14. Further, upon a select operation, the engagement gear 33 of the shift and select shaft 30 is only moved directly in the direction of arrow S2, which is actually required by a conventional technology illustrated in Fig. 4. Therefore, according to the first embodiment of the present invention, there is no need for the engagement gear 33 to return to the neutral position, wherein it is possible to abbreviate an operating distance of the engagement gear 33. Accordingly, a period of time, which is required for a shift and select operation, can be effectively abbreviated.

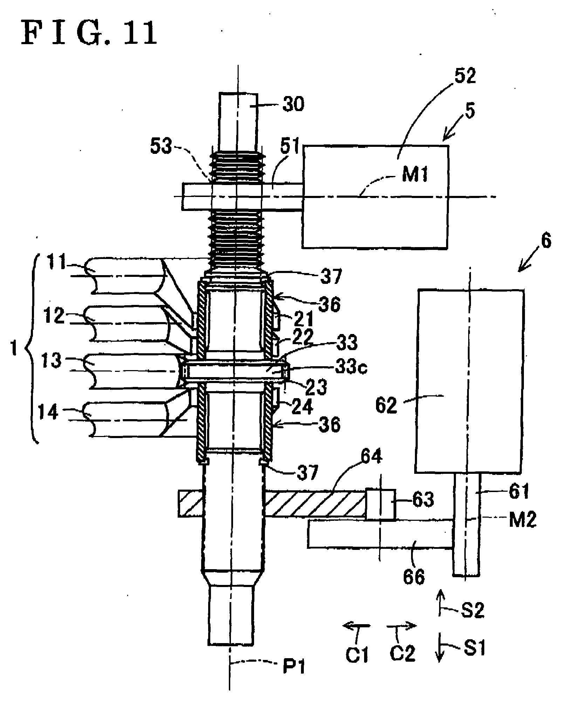

Next, described below is a shift operating apparatus according to a second embodiment of the present invention with reference to Figs. 11, 12 and 13. The structure of the shift operating apparatus according to the second embodiment is basically the same as the structure of the apparatus according to the first embodiment, and the same effects can be generated. Therefore, as well as the first embodiment, gear engagement of the engagement gear 33 of the shift and select shaft 30 can be easily switched among the toothed portions 21, 22, 23 and 24 of the operating members 11, 12, 13 and 14. Moreover, the engagement gear 33 of the shift and select shaft 30 can be only moved directly in the direction of either arrow S1 or S2. Therefore, it is possible to abbreviate an operating distance of the engagement gear 33 and to shorten a period of time that is required for a shift operation of a vehicle, and a shift response can be enhanced.

Next, described is an only different structure of the second embodiment from the first embodiment. As is illustrated in Fig. 11, the switching engagement body 3 is mainly configured with the shift and select shaft 30, the engagement gear 33, which is formed at an axially intermediate portion of the shift and select shaft 30, lock members 36 supported by the shift and select shaft 30. The engagement gear 33 is rotatable about the axis P1 of the shift and select shaft 30 relative to the shift and select shaft 30. On the other hand, the lock members 36 are fixed to the shift and select shaft 30 by means of snap rings 37 so as not to drop out of the shift and select shaft 30. Therefore, the engagement gear 33 is movable together with the shift and select shaft 30.

The lock members 36 are positioned at both axial sides of the engagement gear 33. The lock members 36 are of box-shaped and cover an outer periphery at an axially intermediate portion of the shift and select shaft 30. On a surface of each lock member 36, there is a lock toothed portion 38, which has parallel-type teeth 38c and extends in parallel with the axis P1 of the shift and select shaft 30. Tooth phases (tooth pitches) of the teeth 38c of the lock toothed portion 38 are matched with tooth phases (tooth pitches) of the toothed portions 21, 22, 23 and 24 of the operating members 11, 12, 13 and 14. Therefore, the lock members 36 can be engaged with the respective toothed portions 21, 22, 23 and 24 of the respective operating members 11, 12 13 and 14. As a result, the lock members 36 can serve as a lock mechanism for locking the respective operating members 11, 12, 13 and 14 in place.

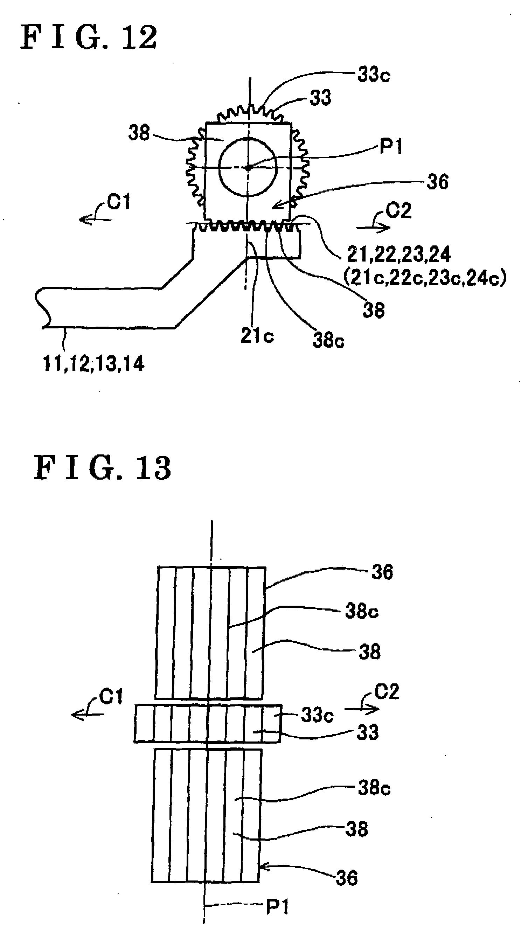

As is obvious from Fig. 12, while the engagement gear 33 of the shift and select shaft 30 is being engaged with the first toothed portion 21 of the first operating member 11, the lock toothed portions 38 of the lock members 36 are engaged with toothed portions of operating members excluding the first operating member 11, i.e., are engaged with the second toothed portion 22 of the second operating member 12, the third toothed portion 23 of the third operating member 13, the fourth toothed portion 24 of the fourth operating member 14. Therefore, even when an outer force is applied to the group of operating members 1, or to one of the operating members, it is possible to curb phase shift in the shift direction of either arrow C1 or C2.

Therefore, when a shift stage is switched from a first shift stage to a second shift stage, it is possible to move the shift and select shaft 30 directly and reliably to the direction of arrow S1 or S2. As described above, when the engagement gear 33 of the shift and select shaft 30 has been already engaged with the first toothed portion 21 of the first operating member 11, the lock toothed portion 38 of the lock member 36 has been already engaged with the other toothed portions except for the first toothed portion 21 of the first operating member 11, i.e., engaged with the second toothed portion 22 of the second operating member 12, the third toothed portion 23 of the third operating member 13, and the fourth toothed portion 24 of the fourth operating member 14. Therefore, an only single operation is required to switch to a condition in which a shift operation can be implemented. That is, an unnecessary operation can be avoided.

(Other embodiments)

The above-described embodiments are applied to a shift operating apparatus for a vehicle transmission that incorporates, therein, a plurality of clutches. However, the embodiments described herein are to be regarded as illustrative rather than restrictive. Variations and changes may be made by others, and equivalents employed, without departing from the spirit of the present invention. Accordingly, it is expressly intended that all such variations, changes and equivalents that fall within the spirit and scope of the present invention as defined in the claims be embraced thereby.

## Claims

1. A shift operating apparatus for a vehicle comprising: a group of operating members (1) comprising plural operating members (11, 12, 13 and 14) arranged all in parallel in a select direction (S1/S2); a switching engagement body (3) engageable with the respective plural operating members (11, 12, 13 and 14) and movable in a shift direction (C1/C2) and in the select direction (S1/S2); a select operating means (5) for moving the switching engagement body (3) in the select direction (S1/S2) and for engaging the switching engagement body (3) with one operating member from among the plural operating members (11, 12, 13 and 14) to establish one shift stage; and a shift operating means (6) for moving the one operating member, which has been engaged with the switching engagement body (3), in the shift direction (C1/C2) by moving the switching engagement body (3) in the shift direction (C1/C2), the shift operating apparatus **characterized in** further comprising:
toothed portions (21, 22, 23 and 24) respectively formed on the respective operating members (11, 12, 13 and 14), tooth phases of the respective toothed portions being mutually matched in the shift direction (C1 and C2) when the operating members (11, 12, 13 and 14) are positioned at a neutral position; and
an engagement gear (33) included in the switching engagement body (3) and engageable with the respective toothed portions (21, 22, 23 and 24) of the respective operating members (11, 12, 13 and 14),
wherein, when one of the operating members (11, 12, 13 and 14) has moved in the shift direction (C1/C2) from the neutral position, the tooth phase of the toothed portion of the one of the operating members (11, 12, 13 and 14) is matched with the tooth phases of the toothed portions of the other operating members (11, 12, 13 and 14).

2. A shift operating apparatus for a vehicle comprising: a group of operating members (1) comprising plural operating members (11, 12, 13 and 14) arranged all in parallel in a select direction (S1/S2); a switching engagement body (3) engageable with the respective plural operating members (11, 12, 13 and 14) and movable in a shift direction (C1/C2) and in the select direction (S1/S2); a select actuator (5) for moving the switching engagement body (3) in the select direction (S1/S2) and for engaging the switching engagement body (3) with one operating member from among the plural operating members (11, 12, 13 and 14) to establish one shift stage; and a shift actuator (6) for moving the one operating member, which has been engaged with the switching engagement body (3), in the shift direction (C1/C2) by moving the switching engagement body (3) in the shift direction (C1/C2), the shift operating apparatus **characterized in** further comprising:
toothed portions (21, 22, 23 and 24) respectively formed on the respective operating members (11, 12, 13 and 14), tooth phases of the respective toothed portions being mutually matched in the shift direction (C1 and C2) when the operating members (11, 12, 13 and 14) are positioned at a neutral position; and
an engagement gear (33) included in the switching engagement body (3) and engageable with the respective toothed portions (21, 22, 23 and 24) of the respective operating members (11, 12, 13 and 14),
wherein, when one of the operating members (11, 12, 13 and 14) has moved in the shift direction (C1/C2) from the neutral position, the tooth phase of the toothed portion of the one of the operating members (11, 12, 13 and 14) is matched with tooth phases of the toothed portions of the other operating members (11, 12, 13 and 14).

3. A shift operating apparatus for a vehicle according to claim 1 or 2, wherein an amount of shift stroke of the respective operating members (11, 12, 13 and 14) moving in the shift direction (C1 or C2) is set at an integer of a number of teeth which are employed for a shift operation.

4. A shift operating apparatus for a vehicle according to any preceding claim being employed for a transmission comprising:
a first frictional engagement-type clutch connected to a first input shaft (301), on which plural drive gears (401, 403, 405 and 407) for odd-numbered shift stages are mounted; and
a second frictional engagement-type clutch connected to a second input shaft (302), on which plural drive gears (402, 404 and 406) for even-numbered shift stages are mounted.

5. A shift operating apparatus for a vehicle according to any preceding claim, further comprising:
a lock member (36) included in the switching engagement body (3) and comprising a lock toothed portion (38) engageable with the respective toothed portions (21, 22, 23 and 24) of the respective operating members (11, 12, 13 and 14) which configures the group of operating members (1).
